# EUROPEAN PATENT APPLICATION

(11) **EP 1 923 849 A1**
(43) Date of publication of application: **21.05.2008**
(21) Application number: 07021107.3
(22) Date of filing: 29.10.2007
(51) Int. Cl.: G07F 19/00

(54) **Automated teller machine**

(30) Priority: 20.11.2006 JP 2006313188
(71) Applicant: Hitachi-Omron Terminal Solutions, Corp., Shinagawa-ku Tokyo 141-0032 (JP)
(72) Inventor: Fujioka, Toshinori, Chiyoda-ku, Tokyo 100-8220 (JP)
(74) Representative: Strehl Schübel-Hopf & Partner

(57) **Abstract**

An automated teller machine includes a non-contact IC reader having a read unit into which an antenna is incorporated, which reads card data from a non-contact IC chip that is incorporated into a portable medium which is arranged on the read unit, and detects whether the portable medium exists on the read unit or not, according to the presence/absence of a reply from the non-contact IC chip, a shutter that opens or closes a bill account activity opening, a display input unit that displays a guidance of transaction operation and receives an input of the transaction operation by a customer, and a control unit that controls the non-contact IC reader, the shutter, and the display input unit, wherein the control unit suspends a teller transaction when it is detected that the portable medium exists after the card data is read from the IC chip that is incorporated into the portable medium through the antenna.

## Description

### BACKGROUND OF THE INVENTION

### Field of the Invention

The present invention relates to an automated teller machine, and more particularly to an automated teller machine that conducts authentication by using a portable medium in which card data is stored.

### Description of the Related Arts

In recent years, the functions of a cellular phone are remarkably improved, for example, a non-contact IC chip that is incorporated into the cellular phone has a function of a cash card. In the case of having the above function, for example, the cellular phone is made to approach an information read portion of a cash automated teller machine to read the information that has been stored in the IC chip. As a result, a technique starts to diffuse, by which a financial transaction can be executed even if the cash card is not carried.

For example, JP-A 2001-297198 discloses an automated teller machine that reads cash card information from a cash card through a magnetic card reader unit, and writes the read information in a non-contact IC card that is incorporated into a cellular phone. Thereafter, the cellular phone is made to approach the cash automated teller machine to read account information, thereby making it possible to start the transaction.

JP-A 2005-174019 discloses that data transfer means for transferring data to an automated teller machine (ATM) from an IC chip that is incorporated into a cellular phone in a non-contact manner is disposed in the cellular phone. After an identification number and financial processing information in the ATM have been written in the IC chip, the written information is transferred to the ATM through the data transfer means, to thereby start transaction using the ATM.

Also, JP-A 2000-48245 discloses that after transaction has been executed by using the automated teller machine, a transaction card that is a non-contact communication medium is read, and in the case where there exists the transaction card used in the execution of the transaction, a customer is led to the fact that the customer leaves the transaction card.

JP-A 2006-146558 discloses that in an authentication issuing device that issues a certification on the basis of a non-contact IC card, after the authentication has been issued on the basis of information read from the non-contact IC card, the operation of reading the non-contact IC card by a card reader is executed. When it is detected that the non-contact IC card exists at a given position, the leaving of the non-contact IC card is alarmed.

According to the conventional art, in the case where after a transaction using an automated teller machine has been completed, a cellular phone or a portable medium such as a non-contact IC card is left (fails to be recovered), a user can be warmed of this fact. However, there is a case in which the user leaves without noticing the warming.

### SUMMARY OF THE INVENTION

The present invention has been made in view of the above problems, and therefore an object of the present invention is to provide an automated teller machine that is capable of surely notifying a user that he has left the medium used for transaction.

In order to solve the above problems, the present invention has the following means.

The automated teller machine according to the present invention includes a non-contact IC reader having a read unit into which an antenna is incorporated, which reads card data from a non-contact IC chip that is incorporated into a portable medium which is arranged on the read unit, and detects whether the portable medium exists on the read unit or not, according to the existence/absence of a reply from the non-contact IC chip; a shutter that opens or closes a bill account activity opening; a display input unit that displays a guidance of transaction operation and receives an input of the transaction operation by a customer; and a control unit that controls the non-contact IC reader, the shutter, and the display input unit,
wherein the control unit suspends a teller transaction when it is detected that the portable medium exists after the card data is read from the IC chip that is incorporated into the portable medium through the antenna.

With the provision of the above configuration, the present invention surely notifies the user of the left medium used in transaction so as to prevent the medium from being left.

### BRIEF DESCRIPTION OF THE DRAWINGS

Fig. 1 is a diagram for explaining the outline of an automated teller machine;
Fig. 2 is a diagram for explaining the details of the automated teller machine shown in Fig. 1;
Fig. 3 is a diagram for explaining the details of a non-contact IC reader;
Fig. 4 is a diagram for explaining a transaction process in the automated teller machine;
Fig. 5 is a diagram showing a transaction select screen;
Fig. 6 is a diagram showing a select screen of a mobile transaction;
Fig. 7 is a diagram showing a screen for guiding that a cellular phone is set on the IC reader;
Fig. 8 is a diagram for explaining the transaction process in the automated teller machine;
Fig. 9 is a diagram showing an input screen of an identification number;
Fig. 10 is a diagram showing an input screen of a desired borrowing amount;
Fig. 11 is a diagram showing a screen representative of in-communication with the center;
Fig. 12 is a diagram showing a screen that facilitates the recovery of the cellular phone;
Fig. 13 is a diagram showing a screen representative of a transaction cancel;
Fig. 14 is a diagram for explaining the cellular phone that is put on a table;
Fig. 15 is a diagram for explaining an example of detecting a leaving of the cellular phone by the aid of a leaving detection sensor;
Fig. 16 is a diagram showing an identification number input screen;
Fig. 17 is a diagram showing an input screen of borrowed money;
Fig. 18 is a diagram showing a screen representative of in-communication with the center;
Fig. 19 is a diagram showing a warning display screen;
Fig. 20 is a diagram for explaining an example of detecting the leaving of the cellular phone by the aid of both of the non-contact IC reader and the leaving detection sensor;
Fig. 21 is a diagram for explaining an example of detecting the leaving of the cellular phone by the aid of both of the non-contact IC reader and the leaving detection sensor;
Fig. 22 is a diagram for explaining a bill account activity opening of a bill account activity mechanism;
Fig. 23 is a diagram for explaining a control circuit of a shutter control unit;
Fig. 24 is a diagram for explaining an example of attaching the non-contact IC reader to the shutter of the bill account activity opening;
Fig. 25 is a diagram for explaining a transaction process in the case where the non-contact IC reader is fitted to the shutter of the bill account activity opening;
Fig. 26 is a diagram for explaining a process of dropping the cellular phone in the bill account activity opening and recovering the cellular phone;
Fig. 27 is a diagram for explaining the control circuit of the shutter control unit;
Fig. 28 is a diagram for explaining a disbursement transaction process;
Fig. 29 is a diagram showing a warning display screen; and
Fig. 30 is a diagram showing a screen for displaying a credit guidance.

### DETAILED DESCRIPTION OF THE PREFERRED EMBODIMENTS

Hereinafter, preferred embodiments will be described with reference to the attached drawings.

### [First Embodiment]

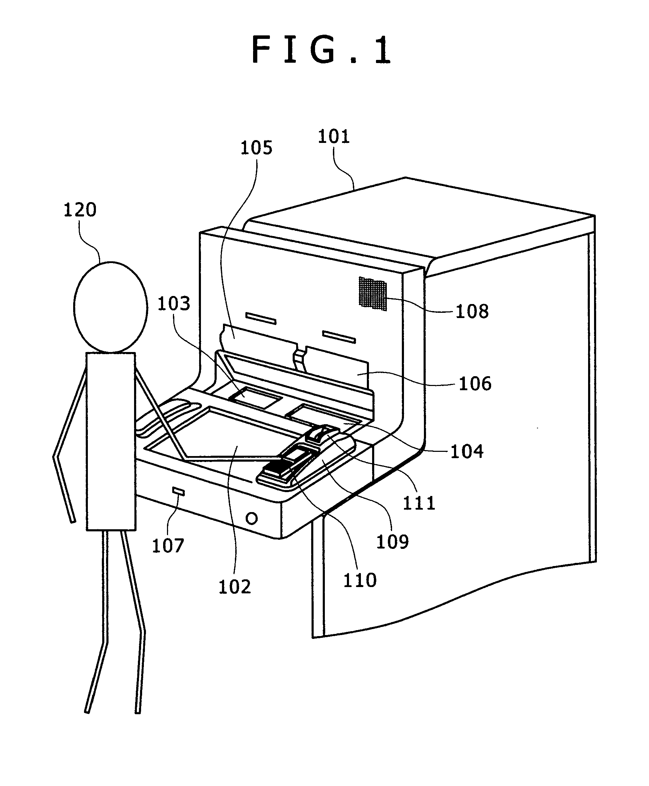

A first embodiment will be described with reference to Figs. 1 to 7. Fig. 1 is a diagram for explaining the outline of an automated teller machine (ATM) 101 according to this embodiment.

Referring to Fig. 1, reference numeral 101 denotes an automated teller machine, 102 is a display input unit that is formed of a touch panel, which displays an operation guidance screen and receives the input operation of a customer 120. Reference numeral 103 denotes a coin account activity opening that receives and pays coins, 104 is a bill account activity opening that receives and pays bills, 105 is a passbook entrance that receives and discharges passbooks, 106 is a card and receipt entrance that receives or discharges cards, or discharges account receipts, and 107 is a customer sensor, which detects that a user (customer) 120 approaches the automated teller machine 101 and moves away from the automated teller machine 101. Reference numeral 108 denotes a speaker, which outputs a voice guidance for account guidance or a guidance voice of an observer who assists the operation from a monitoring center.

The automated teller device 101 is equipped with a non-contact IC reader 109 which is capable of communicating with the non-contact IC chip at a short distance, and a finger vein reader 111 as a biometric device. Also, a non-contact IC chip is incorporated into a cellular phone 110. Card data such as cash card data or credit card data is digitalized and stored in the non-contact IC chip.

The user 120 brings the cellular phone 110 with the IC chip or the non-contact IC card close to the non-contact IC reader 109, thereby making it possible to conduct an account such as deposits or withdrawals of cash. The finger vein reader 111 reads a finger vein from a finger of the user 120 which is held over the finger vein reader 111 in the case where the identification is required by biometrics. Then, the finger vein reader 111 matches the read finger vein against data that has been registered in advance, thereby making it possible to conduct identification.

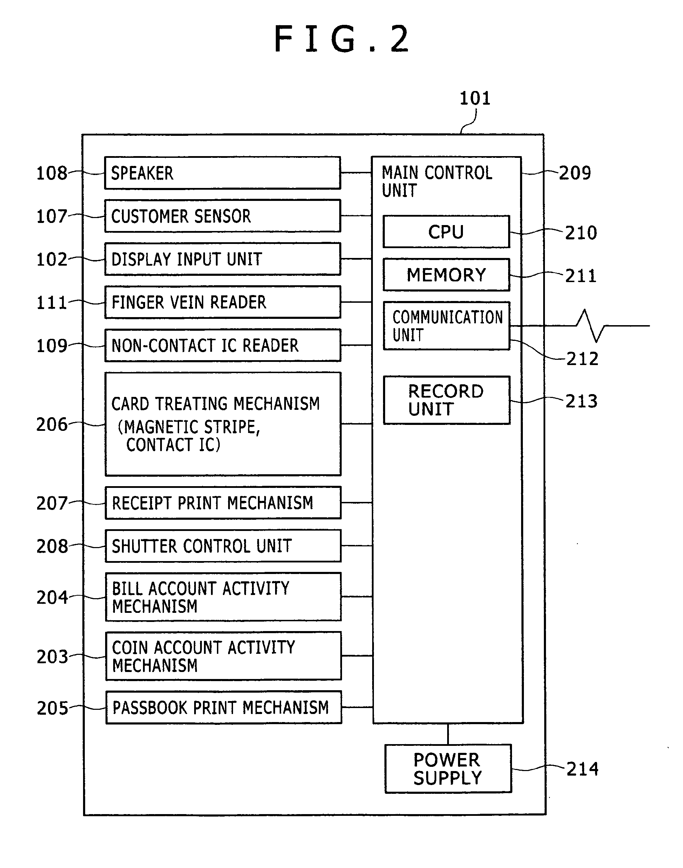

Fig. 2 is a diagram for explaining the function of the automated teller machine shown in Fig. 1. The automated teller machine 101 includes a main control unit 209 that controls the entire automated teller device 101, the speaker 108, the customer sensor 107, the display input unit 102, the finger vein reader 111, the non-contact IC reader 109, a card handling mechanism 206 that reads or writes information on cash cards, a receipt mechanism 207 that prints receipts, and a bill account activity mechanism 204 that treats the deposits or withdrawals of bills. The automated teller machine 101 also includes a shutter control unit 208 that controls a shutter (cover) of the bill account activity opening 104 that is disposed at the upper portion of the bill account activity mechanism 204, a coin account activity mechanism 203 that treats the deposits or withdrawals of coins, and a passbook mechanism 205 that prints the passbooks.

The main control unit 209 includes a CPU 210 that controls the respective processing, a memory 211 that stores program for executing the respective processing, a communication unit 212 for transmitting or receiving data with respect to a host computer or a server, and a record unit 213 such as a hard disc or an optical disc which sequentially records the account contents with the user 120. Also, the main control unit 209 is connected with a power supply 214 that supplies a required electric power.

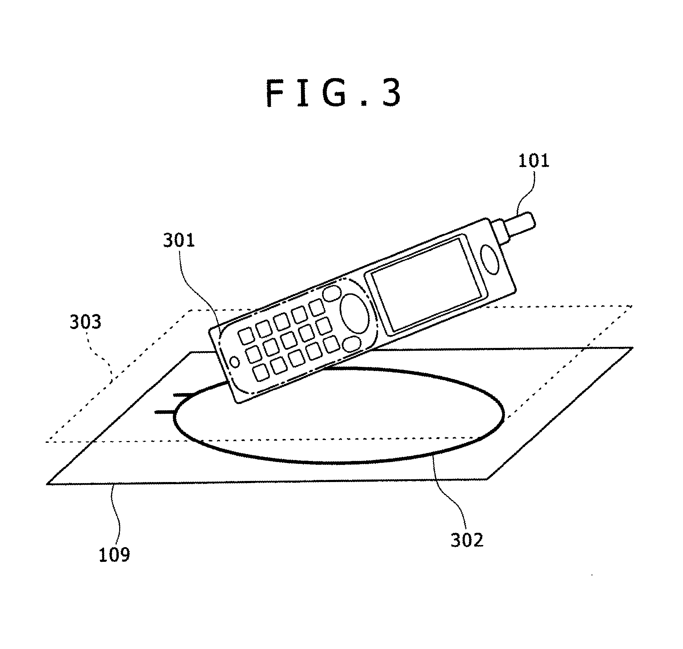

Fig. 3 is a diagram for explaining the details of the non-contact IC reader 109 shown in Figs. 1 and 2. A table 303 on or in the vicinity of which a portable medium such as a non-contact medium or a cellular phone 110 with the non-contact medium is located is disposed on the surface of the non-contact IC reader 109. Also, an antenna 302 is incorporated into the non-contact IC reader 109. The antenna 302 is disposed opposite to a built-in antenna 301 that is connected to the non-contact IC chip that is incorporated into the cellular phone 110 to conduct transmission or reception in a non-contact manner.

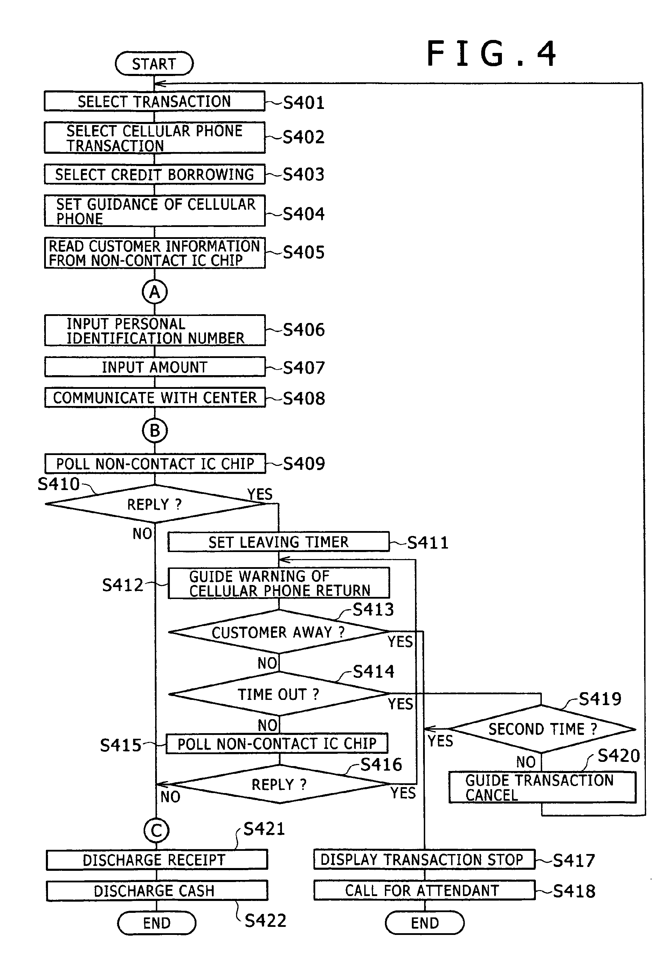

Fig. 4 is a diagram for explaining transactions in the automated teller machine 101 (conducted by using the cellular phone 110).

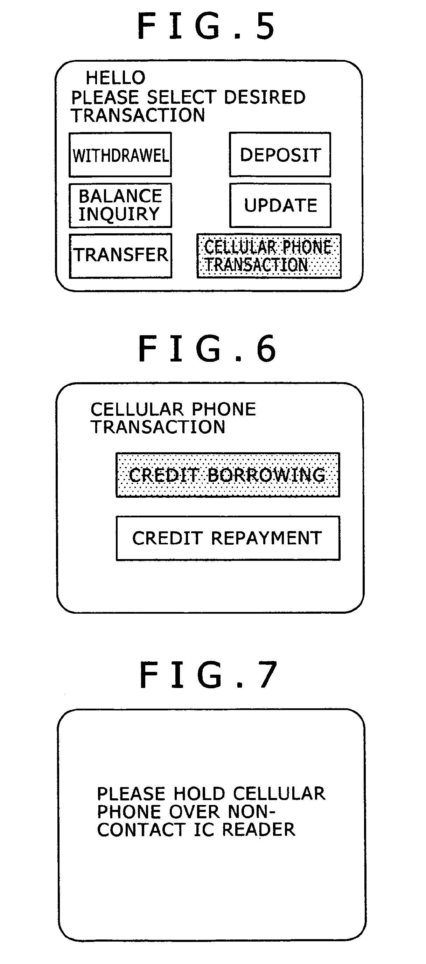

Referring to Fig. 4, when the user 120 comes close to the front of the automated teller machine 101, and the customer sensor 107 detects the presence of the user 120, the main control unit 209 displays a transaction select screen shown in Fig. 5 on the display input unit 102. Then, the main control unit 209 allows the user 120 to select a transaction to be implemented from the screen (Step S401). There is a transaction menu of the cellular phone 110, that is, "cellular phone transaction" on the transaction select screen. In this example, the user selects this menu (Step S402).

Upon selection of the above menu, the select screen of the cellular phone transaction shown in Fig. 6 is displayed on the display input unit 102. In this example, the user 120 selects "credit borrowing" (Step S403) After selection, a set guidance that prompts the cellular phone 110 shown in Fig. 7 to approach (set on the reader) the non-contact IC reader is displayed on the display input unit 102 (Step S404), and it is detected that the cellular phone 110 approaches the upper portion of the non-contact IC reader. When the cellular phone 110 approaches the non-contact IC reader and is detected so as to allow communication, account information of the user 120 according to the selected transaction menu is read from the non-contact IC chip that is incorporated into the cellular phone 110 (Step S405).

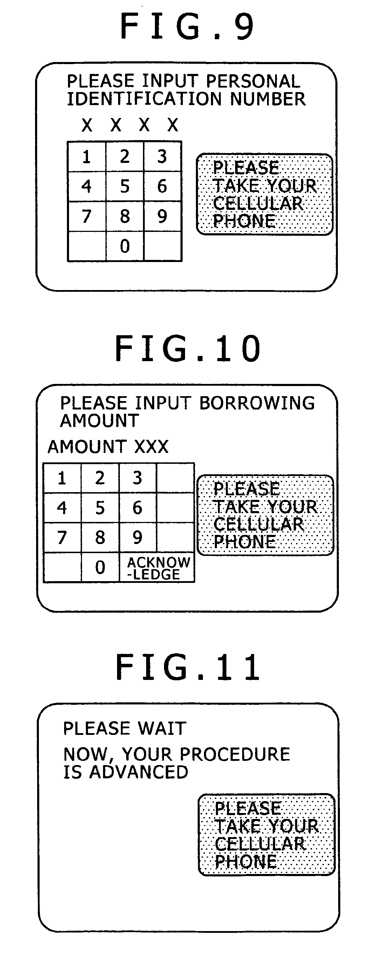

Subsequently, the main control unit 209 displays the input screen of a personal identification number shown in Fig. 9 on the display input unit 102 (Step S406), and prompts the personal identification number to be input. Also, the main control unit 209 displays the input screen of a desired borrowing amount shown in Fig. 10 (Step S407), and prompts the borrowing amount to be input.

Upon input of the personal identification number and the borrowing amount, the main control unit 209 transmits that transaction information to a business center of a financial institution through the communication unit 212 (Step S408). The host computer of the business center searches the personal identification number that has been registered in advance on the basis of the transmitted account information of the user 120, and matches the searched personal identification number against the input personal identification number. When matching is successful, the host computer transmits a reply that the withdrawal of the desired borrowing amount is permitted to the automated teller device 101. Those processing is called "communication with the center". In this situation, a screen indicative of "in-communication with the center" shown in Fig. 11 is displayed.

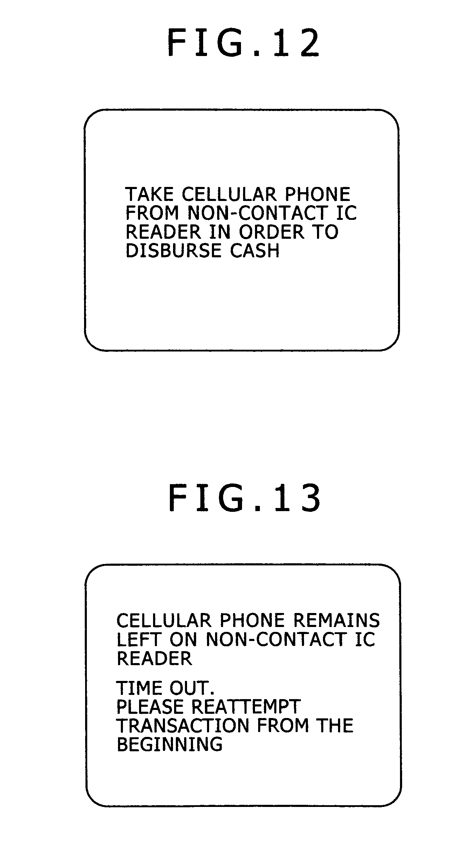

Subsequently, the main control unit 209 transmits a polling command to the non-contact IC chip of the cellular phone 110 from the non-contact IC reader 109, and monitors a reply from the non-contact IC chip (Step S409). In the case of receiving the reply, the main control unit 209 determines that the cellular phone 110 has been left on the table as it was. In the case of receiving no reply, the main control unit 209 determines that the cellular phone 110 has been recovered from the table (Step S410). When it is determined that the cellular phone 110 has been left as it was, a leaving detection timer starts (Step S411). Then, the main control unit 209 displays a message "take a cellular phone in order to withdraw cash" which prompts the cellular phone shown in Fig. 12 to be recovered on the display input unit 102. Also, the main control unit 209 issues the same message from the speaker 108 by voice (Step S412) . Then, the main control unit 209 determines whether the user 120 has been away from the automated teller machine 101 or not, by the aid of the customer sensor 107 (Step S413). In the case where the user 120 has not been away, the main control unit 209 reads a leaving detection timer elapse time, and determines whether a given time has been elapsed, and a time-out is made or not (Step S414). In the case where no time-out is made, the main control unit 209 transmits a polling command to the cellular phone 110 from the non-contact IC reader 109, and monitors its reply (Step S415).

In the case of receiving the reply, the main control unit 209 determines that the cellular phone 110 has been left as it was. On the other hand, in the case of receiving no reply, the main control unit 209 determines that the cellular phone 110 has been removed (Step S416) . In the case where the main control unit 209 determines that the cellular phone 110 has been left as it was, the processing is returned to Step S412, and issues a message that again prompts the recovery of the cellular phone from the display input section 102 or the speaker 108.

In Step S413, in the case where the main control unit 209 determines that the user 120 has been away from the automated teller machine 101 (the user 120 has been away while the cellular phone 110 has been left), the main control unit 209 determines stops the transaction in the automated teller machine 101 (Step S417), and calls for an attendant, and instructs the recovery of the cellular phone 110 (Step S418).

Also, in Step S414, when the timer is timed out, the main control unit 209 determines whether the time-out is first or second time-out (Step S419). When the time-out is the first time-out, the main control units 209 displays "transaction cancel screen" shown in Fig. 13, and guides the user 120 to reattempt the transaction from the beginning (Step S420). In the case where the time-out is the second time-out, the main control units 209 stops the transaction in the automated transaction device 101 (Step S417), calls for the attendant (Step S418), and instructs the attendant to guide the user 120 the operation.

In Step S410 or S416, in the case where the main control unit 209 determines that the cellular phone 110 has been recovered from the table, the main control unit 209 discharges the receipts on which the transaction contents have been printed by the aid of the receipt print mechanism 207 from the card and receipt entrance 106 (Step S421). Also, the bill account activity mechanism 204 starts the withdrawal operation, pays out the bill of the desired withdrawal amount, and discharges the bill from the bill account activity opening 104 (Step S422). When the customer sensor 107 confirms that the user receives the bill, and moves away from the automated teller machine 101, the transaction is completed.

### [Second Embodiment]

In the first embodiment, the leaving of the cellular phone 110 starts to be detected after the completion of the communication with the center (that is, a point (B) shown in Fig. 4). On the contrary, in this embodiment, the leaving of the cellular phone 110 starts to be detected after the account information of the user 120 has been read from the non-contact IC chip (that is, a point (A) shown in Fig. 4).

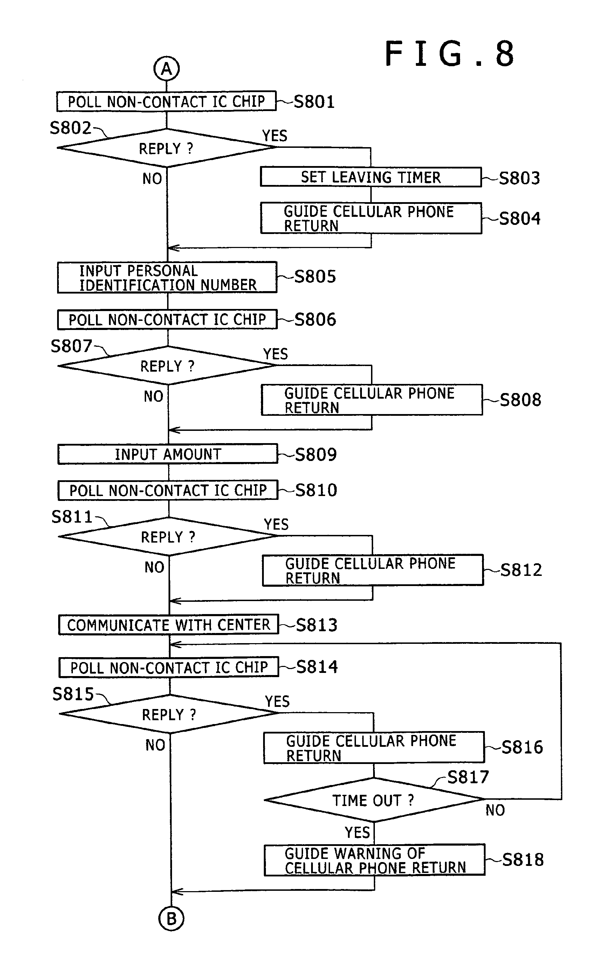

Fig. 8 is a diagram for explaining a transaction process in the automated transaction device 101 according to this embodiment (since the account information is read (A) until the communication with the center is completed (B).

Referring to Fig. 8, after the account information of the user 120 has been read from the non-contact IC chip (A), the main control unit 209 transmits a polling command to the cellular phone 120 from the non-contact IC reader 109 to monitor its reply (S801), and detects whether the cellular phone 110 has been left as it was or not (Step S802). In the case where the cellular phone 110 has been left as it was, the main control unit 209 starts the leaving detection timer (Step S803), and is ready to add a warning display of "take cellular phone" within a screen of the normal personal identification number input guidance shown in Fig. 9 (Step 5804). Then, the main control unit 209 displays the screen of the personal identification number input guidance shown in Fig. 9, and prompts the personal identification input (Step S805).

When the user 120 has completely input the personal identification number, the main control unit 209 transmits the polling command to the cellular phone 110 from the non-contact IC reader 109, and monitors its reply (Step S806). Upon receiving the reply, the main control unit 209 determines that the cellular phone 110 has been left as it was, but upon receiving no reply, the main control unit 209 determines that the cellular pone has been recovered (Step S807) . When the reply is returned, the main control unit 209 starts the leaving detection timer (Step S803), and is ready to add a warning display of "take cellular phone" within a screen of the normal borrowing amount input guidance shown in Fig. 10 (Step S808). Then, the main control unit 209 displays the screen of the input guidance of the borrowing amount shown in Fig. 10 (Step S809).

When the user 120 has completely input the borrowing amount, the main control unit 209 transmits a polling command to the cellular phone 110 from the non-contact IC reader 109, and monitors its reply (Step S810) . Upon receiving the reply, the main control unit 209 determines that the cellular phone 110 has been left as it was, but upon receiving no reply, the main control unit 209 determines that the cellular pone has been recovered (Step S811). When the reply is returned, the main control unit 209 determines that the cellular phone 110 has been left as it was, and is ready to add a warning display of "take cellular phone" within the normal guidance screen of "please wait (in-communication with the center) " shown in Fig. 11 (Step S812). Upon input of the personal identification number and the borrowing amount, the main control unit 209 displays the guidance screen of "please wait (in-communication with the center)" shown in Fig. 11, and transmits those transaction information to the business center of the financial institution by the aid of the communication unit 212 (Step S813). Upon completion of the transmission to the center, the main control unit 209 transmits a polling command to the cellular phone 110 from the non-contact IC reader 109, and monitors its reply (Step S814). Upon receiving the reply, the main control unit 209 determines that the cellular phone 110 has been left as it was, but upon receiving no reply, the main control unit 209 determines that the cellular pone has been removed (Step S815). When the reply is returned, the main control unit 209 determines that the cellular phone 110 has been left as it was, and displays the guidance screen of "please wait (in-communication with the center)" added with the warning display of "take a cellular phone" shown in Fig. 11 (Step S816). Then, the main control unit 209 reads the leaving detection timer, and determines whether a given time is elapsed and timed out or not (Step S817). When the elapsed time is within the given time, the processing is returned to Step S814, and the main control unit 209 transmits the polling command to the cellular phone 110 from the non-contact IC reader 109, and repeats the above operation.

In the case where the main control unit 209 determines that the elapsed time is timed out in Step S817, the cellular phone has been left. Therefore, the main control unit 209 displays the warning of "take a cellular phone since cash is withdrawn" shown in Fig. 12 and also conducts the same voice guidance from the speaker 108 (Step S818).

In the above example, in the leaving warning of the cellular phone 110, the display of "take a cellular phone" is merely added within the normal guidance screen as shown in Figs. 9 to 11. Alternatively, it is possible that the a flicker lamp is fitted to a stand 303 of the non-contact IC reader 109 shown in Fig. 3 in advance, and in the case the cellular phone 110 has been left, the flicker lamp is flickered so that the leaving is visually easily confirmed.

### [Third Embodiment]

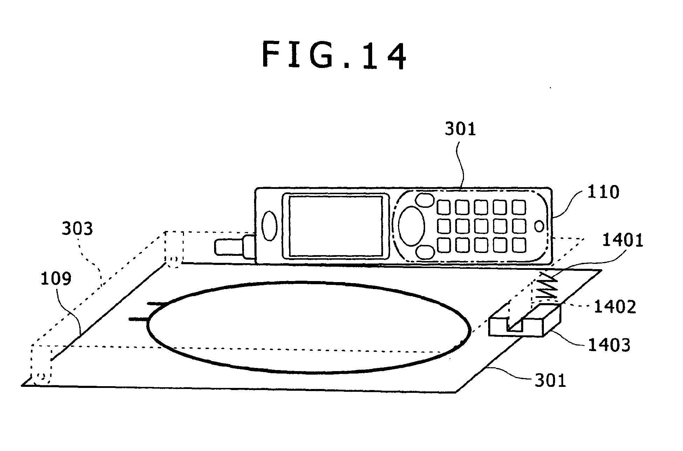

In order to maintain an excellent communication between the non-contact IC reader 109 and the non-contact IC chip that is incorporated into the cellular phone 110, it is necessary that the built-in antenna 301 of the non-contact IC reader 109 is disposed opposite to the antenna 301 of the non-contact IC reader 109 in parallel, and those antennas are made to approach each other within a certain distance range (within about 20 mm) while those center axes coincide with each other. However, the communication cannot be conducted in the case where the cellular phone 110 is disposed on a corner of the table 303 or displaced from the center axis as shown in Fig. 14. In this case, even if the polling command is transmitted to the cellular phone 110 from the non-contact IC reader 109, its reply cannot be detected, and the leaving of the cellular phone 110 cannot be detected.

In this embodiment, a spring 1401 is attached below the table 303 so that the table 303 is vertically movable. Also, the ends of the table 303 are bent to form a detection piece 1402. In addition, a leaving detection sensor 1403 is so attached as to interpose the detection piece 1402 therebetween. When the non-contact medium such as the non-contact IC card or the cellular phone 110 is put on the table 303, the table moves down by its weight. The downward movement is detected by the leaving detection sensor 140, thereby making it possible to more surely detect the leaving.

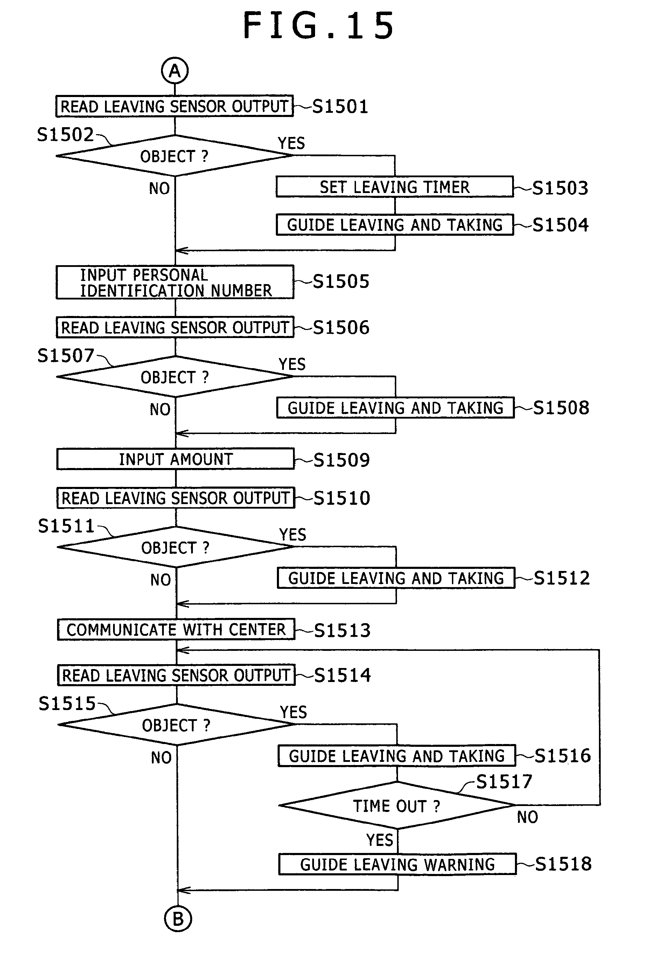

Fig. 15 is a diagram for explaining an example of detecting the leaving of the cellular phone 110 by the aid of the leaving detection sensor 1403 (conducted after the account information is read (A) till the communication with the center (B)).

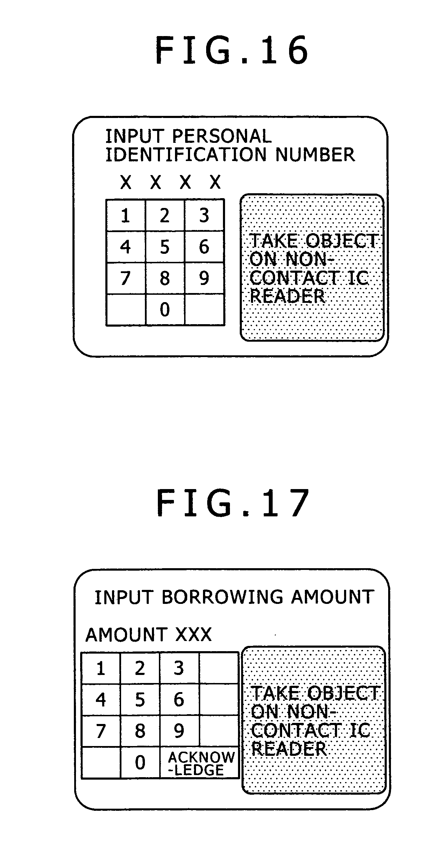

Referring to Fig. 15, after the account information has been read (A), the main control unit 209 reads the output of the leaving detection sensor 1403 (Step S1501). When the leaving detection sensor 1403 detects an object on the table 303 of the non-contact IC reader 109 (Step S1502), the main control unit 209 starts the leaving detection timer (Step S1503), and is ready to add a warning display of "take an object on the non-contact IC reader" within the screen of a normal personal identification number input guidance shown in Fig. 16 (Step S1504). Then, the main control unit 209 displays the screen of the personal identification number input guidance shown in Fig. 16, and prompts the input of the personal identification number (Step S1505). When the user 120 has completely input the personal identification number, the main control unit 209 reads the output of the leaving detection sensor 1403 (Step S1506). When it is confirmed that an object exists on the non-contact IC reader 109 (Step S1507), the main control unit 209 is ready to add a warning display of "take an object on the non-contact IC reader" within the screen of the input guidance of a normal borrowing amount shown in Fig. 17 (Step S1508). Then, the main control unit 209 displays the screen of the input guidance of the borrowing amount shown in Fig. 17 (Step S1509).

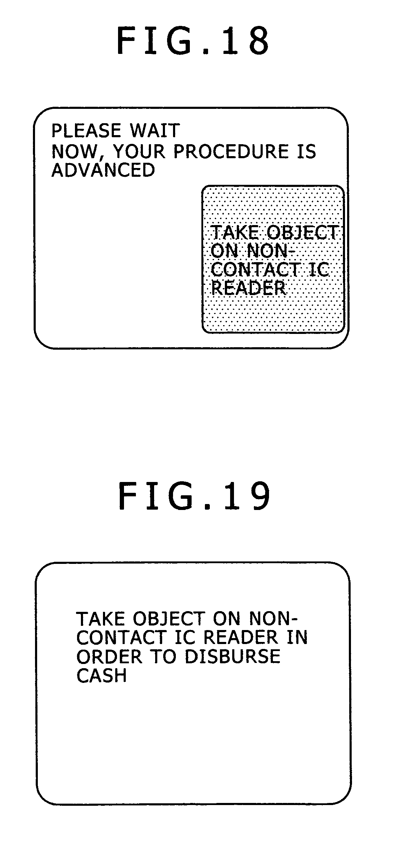

When the user 120 has completely input the personal identification number, the main control unit 209 reads the output of the leaving detection sensor 1403 (Step S1510). When it is confirmed that an object exists on the non-contact IC reader 109 (Step S1511), the main control unit 209 is ready to add a warning display of "take an object on the non-contact IC reader" within the screen of the normal guidance of "please wait (in-communication with the center)" (Step S1512). When the personal identification number and the borrowing amount have been input, the main control unit 209 displays the screen of the guidance of "please wait (in-communication with the center)", and also transmits those transaction information to the business center of the financial institution with the use of the communication unit 212 (Step S1513). When the transmission to the center has been completed, the main control unit 209 reads the output of the leaving detection sensor 1403 (Step S1514). When it is confirmed that an object exists on the non-contact IC reader 109 (Step S1515), the main control unit 209 again displays the screen of the guidance of "please wait (in-communication with the center)" added with the warning display of "take an object on the non-contact IC reader" shown in Fig. 18 (Step S1516) . Then, the main control unit 209 reads the leaving detection timer, and determines whether a given time is elapsed and timed out or not (Step S1517). When the elapsed time is not timed out, the processing is returned to Step S1514, and the main control unit 209 reads the output of the leaving detection sensor 1403, and repeats the above operation. In the case where the main control unit 209 determines that the elapsed time is timed out in Step S1517, the main control unit 209 displays the warning of "take an object on the non-contact IC reader in order to withdraw cash", and also conducts the same voice guidance from the speaker 108 (Step S1518).

### [Fourth Embodiment]

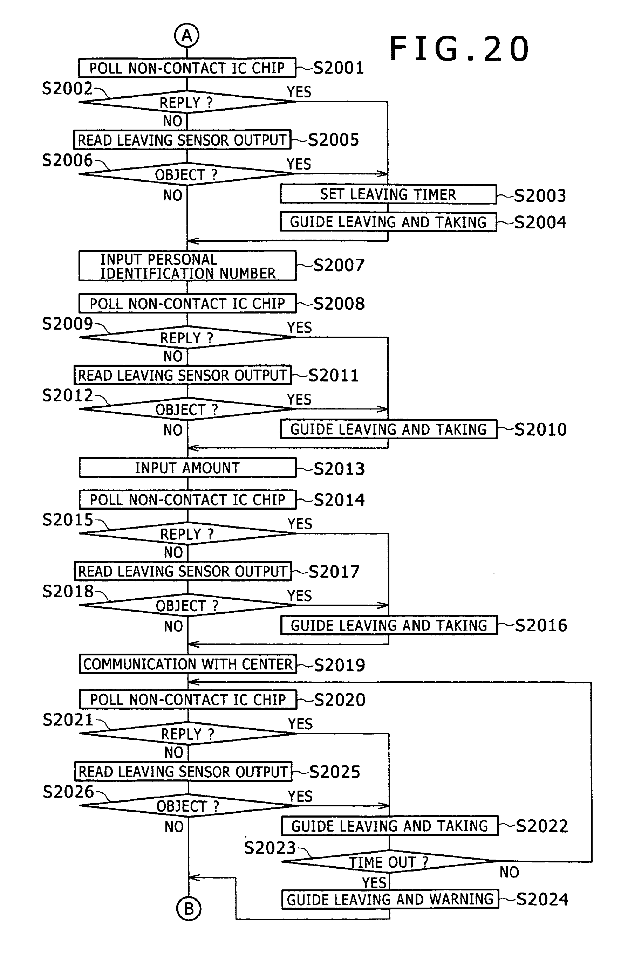

Fig. 20 is a diagram for explaining an example of detecting the leaving of the cellular phone 110 by the aid of both of the non-contact IC reader 109 and the leaving detection sensor 1403 (conducted after the account information has been read (A) till the communication with the center (B).

Referring to Fig. 20, the main control unit 209 transmits the polling command to the cellular phone 110 from the non-contact IC reader 109 after the account information has been read (A), and monitors its reply (Step S2001). Upon receiving the reply, the main control unit 209 determines that the cellular phone 110 has been left (Step S2002) . Then, the main control unit 209 starts the leaving detection timer (Step S2003), and is ready to add a warning display of "take an object on the non-contact IC reader" within a screen of the normal personal identification number input guidance shown in Fig. 16 (Step S2004). Similarly, in the case where there is no reply to the polling command from the non-contact IC reader 109, the main control unit 209 reads the output of the leaving detection sensor 1403 for confirmation (Step S2005). When the leaving detection sensor 1403 detects that an object exists on the table 303 of the non-contact IC reader 109 (S2006), the main control unit 209 starts the leaving detection timer (Step S2003), and is ready to add a warning display of "take an object on the non-contact IC reader" within the screen of the normal personal identification number input guidance shown in Fig. 16 (52004). Then, the main control unit 209 displays the screen of the personal identification number input guidance shown in Fig. 16, and prompts the input of the personal identification number (Step S2007).

When the user 120 has completely input the personal identification number, the main control unit 209 transmits a polling command to the cellular phone 110 from the non-contact IC reader 109 (Step S2008). When the reply to the polling command is returned, the main control unit 209 is ready to add a warning display of "take an object on the non-contact IC reader" within the screen of the normal borrowing amount input guidance shown in Fig. 17 (Step S2010). Similarly, in the case where there is no reply to the polling command, the main control unit 209 reads the output of the leaving detection sensor 1403 for confirmation (Step S2011). When the leaving detection sensor 1403 detects an object on the table 303 of the non-contact IC reader 109 (S2012), the main control unit 209 is ready to add a warning display of "take an object on the non-contact IC reader" within the screen of the normal borrowing amount input guidance shown in Fig. 17 (Step S2010). Then, the main control unit 209 displays the screen of the borrowing amount input guidance shown in Fig. 17 (Step S2013).

When the user 120 has completely input the borrowing amount, the main control unit 209 transmits a polling command to the cellular phone 110 from the non-contact IC reader 109, monitors its reply, and determines whether the cellular phone 110 has been left as it was or not (Step S2014). When the main control unit 209 determines that an object exists on the non-contact IC reader 109 (S2015), the main control unit 209 is ready to add a warning display of "take an object on the non-contact IC reader" within the normal screen of "please wait (in-communication with the center)" shown in Fig. 18 (S2016). Even if there is no reply, the non-contact IC reader 109 reads the output of the leaving detection sensor 1403 for confirmation (Step S2017). When the leaving detection sensor 1403 detects an object on the table 303 of the non-contact IC reader 109 (S2018), the main control unit 209 is ready to add a warning display of "take an object on the non-contact IC reader" within the normal screen of "please wait (in-communication with the center)" shown in Fig. 18 (S2016). When the personal identification number and the borrowing amount have been input, the main control unit 209 displays the screen of "please wait (in-communication with the center)" shown in Fig. 18, and then transmits those transaction information to the business center of the financial institution with the use of the communication unit 212 (Step S2019).

Upon completion of the transmission to the center, the main control unit 209 transmits a polling command to the cellular phone 110 from the non-contact IC reader 109, and monitors its reply (Step S2020). When the main control unit 209 determines that the cellular phone 110 has been left as it was (Step S2021), the main control unit 209 again displays the screen of "please wait (in-communication with the center)" added with the warning display of "take an object on the non-contact IC reader" shown in Fig. 18 (Step S2022). Then, the main control unit 209 reads the leaving detection timer, and determines whether a given time is elapsed and timed out or not (Step S2023). When the elapsed time is not timed out, the processing is returned to Step S2020, and the main control unit 209 repeats the above operation. In the case where the main control unit 209 determines that the elapsed time is timed out in Step S2023, the main control unit 209 displays the warning of "take an object on the non-contact IC reader in order to withdraw cash" because an object has been left on the non-contact IC reader, and also conducts the same voice guidance from the speaker 108 (Step S2024). Similarly, in the case where the non-contact IC reader 109 does not detect the reply in Step S2021, the main control unit 209 reads the output of the leaving detection sensor 1403 for confirmation (Step S2025). When the leaving detection sensor 1403 confirms that an object exists on the table 303 of the non-contact IC reader 109 (Step S2026), the main control unit 209 again displays the screen of "please wait (in-communication with the center) " added with the warning display of "take an object on the non-contact IC reader" shown in Fig. 18 (Step S2022).

### [Fifth Embodiment]

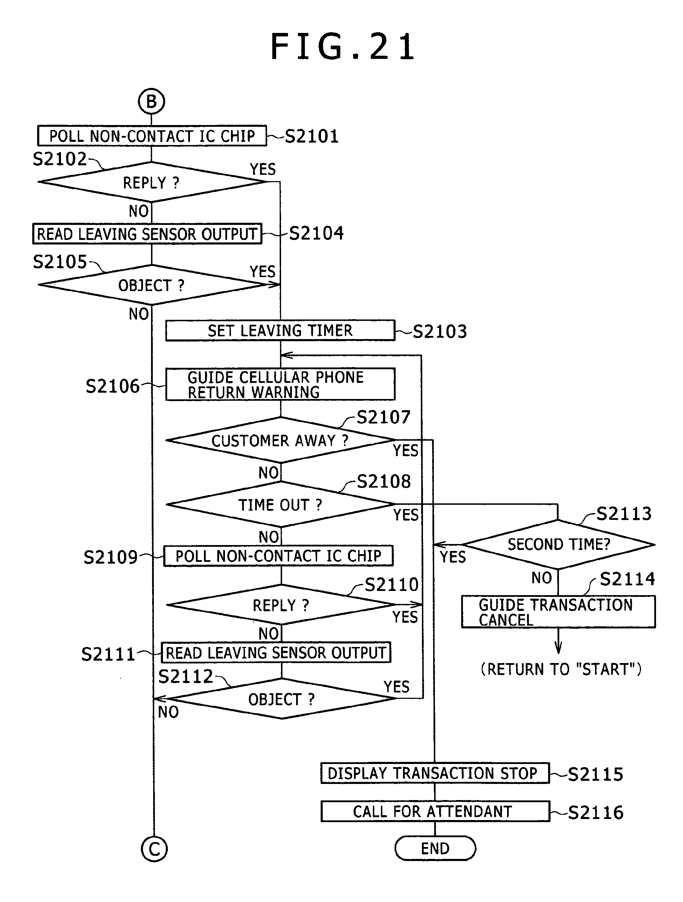

Fig. 21 is a diagram for explaining an example of detecting the leaving of the cellular phone 110 by the aid of both of the non-contact IC reader 109 and the leaving detection sensor 1403 (conducted after the communication with the center (B)).

Referring to Fig. 21, the main control unit 209 transmits a polling command to the cellular phone 110 from the non-contact IC reader 109, and monitors its reply (Step S2101). When its reply is returned, the cellular phone 110 has been left as it was, and when there is no reply, the main control unit 209 determines that the cellular phone 110 has been recovered (Step S2102). In the case where the cellular phone 110 has been left as it was, the main control unit 209 starts the leaving detection timer (Step S2103). Even if the leaving of the cellular phone 110 cannot be confirmed from the non-contact IC reader 109, the main control unit 209 reads the output of the leaving detection sensor 1403 for confirmation (Step S2104). Then, the leaving detection sensor 1403 determines whether an object exists on the table 303 of the non-contact IC reader 109 or not (Step S2105).

In the case where the main control unit 209 determines that the cellular phone 110 has been left as it was, the main control unit 209 starts the leaving detection timer (Step S2103). The main control unit 209 displays the screen of "take an object on the non-contact IC reader in order to withdraw cash" shown in Fig. 19 on the display input unit 102, and issues a warning to the user 120 with the same voice guidance from the speaker 108 (Step S2106). The customer sensor 107 detects whether the user 120 has been away from the automated teller machine 101 or not (Step S2107) . When the customer sensor 107 detects the presence of the user 120, the main control unit 209 reads the leaving detection timer, and detects whether a given time has been elapsed and timed out or not (Step S2108). In the case where the elapsed time is not timed out, the main control unit 209 transmits a polling command to the cellular phone 110 from the non-contact IC reader 109, and monitors its reply (Step S2109). When its reply is returned, the cellular phone 110 has been left as it was, and when there is no reply, the main control unit 209 determines that the cellular phone 110 has been recovered (Step S2110). When the cellular phone 110 has been left as it was, the processing is returned to Step S2106, and the main control unit 209 again guides "take an object on the non-contact IC reader in order to withdraw cash" shown in Fig. 19 from the display input unit 102 or the speaker 108, and issues a warning to the user 120. Even if the leaving of the cellular phone 110 cannot be confirmed by the non-contact IC reader 109, the main control unit 209 reads the output of the leaving detection sensor 1403 for confirmation (Step S2111). Then, the leaving detection sensor 1403 determines whether an object exists on the table 303 of the non-contact IC reader 109 or not (Step S2112). When the leaving detection sensor 1403 detects the object, the processing is returned to Step S2106. The above operation is repeated, and the main control unit 209 waits for the recovery of the cellular phone 110. In Step S2108, when a given time has been elapsed and timed out, the main control unit 209 determines whether the time-out is first or second time-out (Step S2113). When the time-out is the first time-out, the main control units 209 displays "transaction cancel screen" shown in Fig. 13, and guides the user 120 to reattempt the transaction from the beginning (Step S2114). In the case where the time-out is the second time-out, the main control unit 209 stops the transaction in the automated transaction device 101 (Step S2115), calls for an attendant, and instructs the attendant to guide the user 120 the operation (Step S2116) . In Step S2107, in the case where the user 120 has been away while the cellular phone 110 has been left, the main control unit 209 stops the transaction in the automated teller machine 101 (Step S2115), notifies the attendant, and instructs the attendant to recover the cellular phone 110 (Step S2116).

### [Sixth Embodiment]

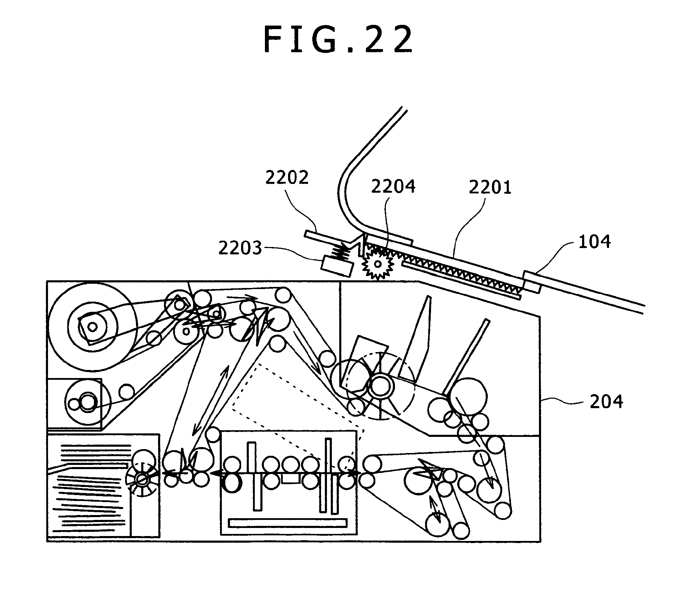

Fig. 22 is a diagram for explaining a bill account activity opening 104 of a bill account activity mechanism 204. The bill account activity opening 104 is fitted with a shutter (cover) 2201. The shutter 2201 is always engaged with a shutter lock 2202, and is locked so as not be broken. When the shutter 2201 is opened, an electric power is fed to a shutter lock cancel solenoid 2203, and the shutter lock 2202 is sucked downward so as to cancel the lock. Then, a shutter motor 2204 is driven to open the shutter 2201. The shutter open/close operation is controlled by the shutter control unit 208 shown in Fig. 2.

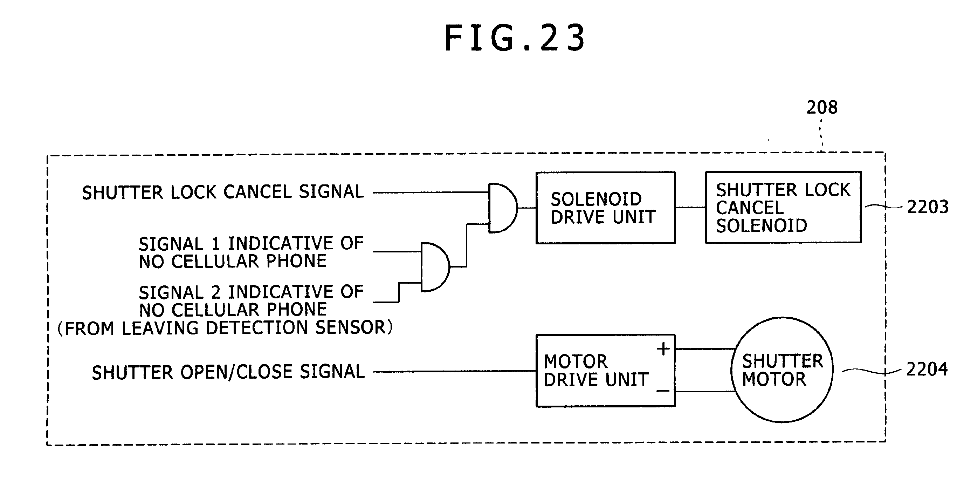

Fig. 23 is a diagram for explaining a control circuit of the shutter control unit 208. A cancel signal of the shutter lock cancel solenoid 2203 is effective under the condition where there exist both of signals 1 and 2. The signal 1 is indicative of no cellular phone 110 and transmitted from the non-contact IC reader 109, and the signal 2 is indicative of no cellular phone 110 and transmitted from the leaving detection sensor 1403. The lock is canceled, and the shutter can be opened.

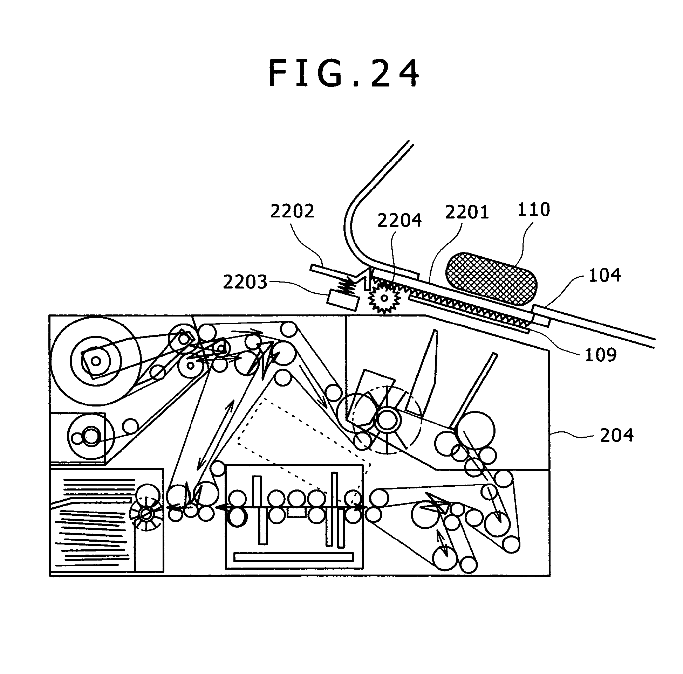

Fig. 24 is a diagram for explaining an example of attaching the non-contact IC reader 109 to the shutter 2201 of the bill account activity opening 104. In this example, the shutter 2201 of the bill account activity opening 104 forms a table of the non-contact IC reader 109. This example is different from the example shown in Fig. 1 in that the user 120 makes the cellular phone 110 approach the upper portion of the shutter 2201.

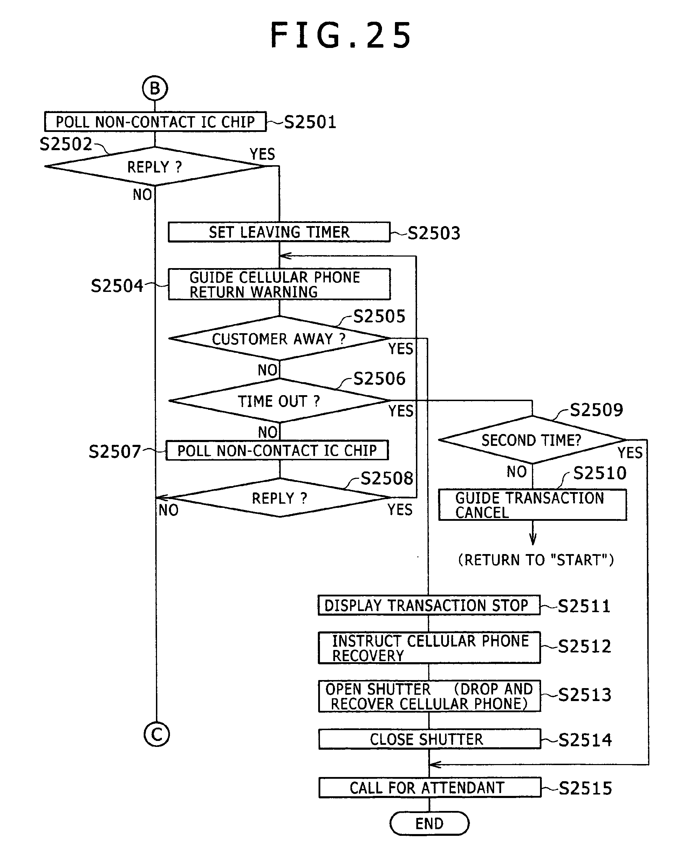

Fig. 25 is a diagram for explaining a transaction process in the case where the non-contact IC reader 109 is fitted to the shutter 2201 of the bill account activity opening 104 (after the communication with the center (B)).

Referring to Fig. 25, the main control unit 209 transmits a polling command to the cellular phone 110 from the non-contact IC reader 109 (Step S2501). When its reply is returned, the cellular phone 110 has been left as it was, and when there is no reply, the main control unit 209 determines that the cellular phone 110 has been recovered (Step S2502). When the cellular phone 110 has been left as it was, the main control unit 209 starts the leaving detection timer (Step S2503). Then, the main control unit 209 displays "take an object on the non-contact IC reader in order to withdraw cash" shown in Fig. 19 on the display input unit 102, and issues a warning to the user 120 with the same voice guidance from the speaker 108. Then, the customer sensor 107 detects whether the user 120 has been away from the automated teller device 101 or not (Step S2505). Then, the main control unit 209 reads the leaving detection timer, and determines whether a given time has been elapsed and timed out or not (Step S2506). In the case where the elapsed time is not timed out, the main control unit 209 transmits a polling command to the cellular phone 110 from the non-contact IC reader 109, and monitors its reply (Step S2507). When its reply is returned, the cellular phone 110 has been left as it was, and when there is no reply, the main control unit 209 determines that the cellular phone 110 has been recovered (Step S2508). When the main control unit 209 determines the cellular phone 110 has been left as it was, the processing is returned to Step S2504, and the main control unit 209 again guides "take an object on the non-contact IC reader in order to withdraw cash" shown in Fig. 19 from the display input unit 102 or the speaker 108, and issues a warning to the user 120. The above operation is repeated, and the main control unit 209 waits for the user to recover the cellular phone 110. In Step S2506, when a given time has been elapsed and timed out, the main control unit 209 determines whether the time-out is first or second time-out (Step S2509). When the time-out is the first time-out, the main control units 209 displays "transaction cancel screen" shown in Fig. 13, and guides the user 120 to reattempt the transaction from the beginning (Step S2510).

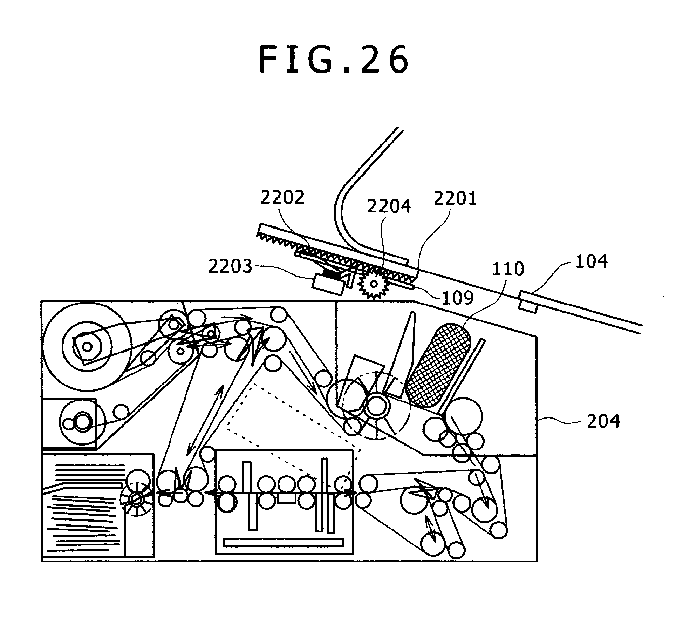

In Step S2505, in the case where the user 120 has been away while the cellular phone 110 has been left, the automated teller device 101 displays "stops the transaction" (Step S2511). Also, the main control unit 209 issues an instruction of recovering the cellular phone 110 to the shutter control unit 208 (Step S2512). In this case, as shown in Fig. 26, the main control unit 209 opens the shutter 2201 of the bill account activity opening 104, drops the cellular phone 110 in the bill account activity opening, and recovers the cellular phone 110 (Step S2513). Then, upon completion of the recovery, the main control unit 209 closes the shutter 2201 (Step S2514).

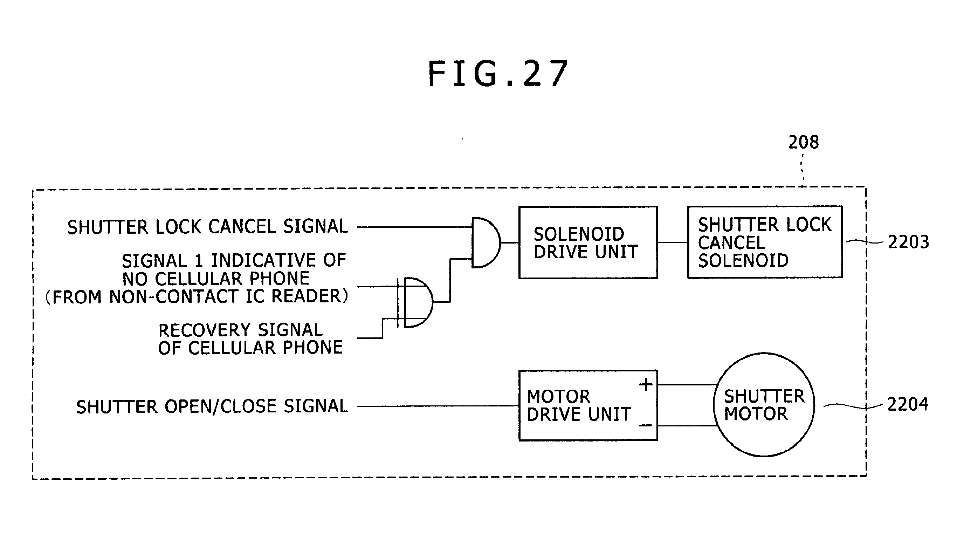

Fig. 27 is a diagram for explaining the control circuit of the shutter control unit 208 in the case where the non-contact IC reader 109 is fitted to the shutter 2201 of the bill account activity opening 104. A cancel signal of the shutter lock cancel solenoid 2203 is connected to an exclusive OR which is effective in the case where there is no signal 1 indicative of no cellular phone 110 from the non-contact IC reader 109, that is, in the case where the cellular phone 110 has been left, and there is a recovery signal of the cellular phone. The main control unit 209 thereafter notifies the attendant of the cellular phone that has been recovered in the bill account activity opening, and requests the recovery thereof (Step S2515). In Step S2509, the main control unit 209 determines that the elapsed time is the second time out, the main control unit 209 calls for the attendant and guides the user 120 the operation (Step S2515).

### [Seventh Embodiment]

In the above embodiments, the processing of the automated teller machine has been described with reference to an example of the withdrawal transaction that is "credit borrowing" using the cellular phone 110. On the other hand, in this embodiment, the processing of the automated teller machine will be described with reference to the deposit transaction that is "credit repayment".

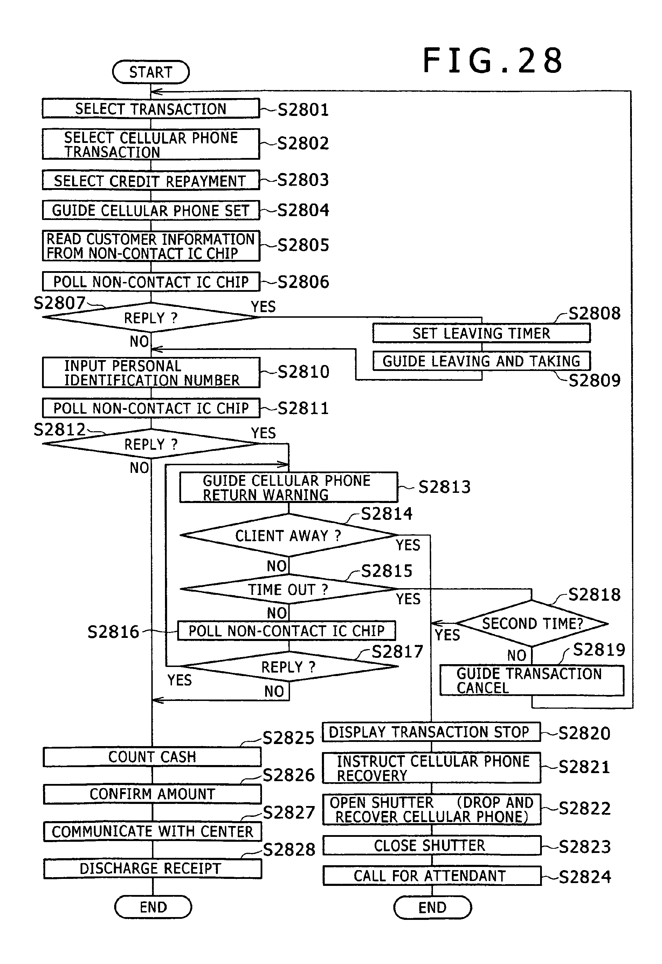

Fig. 28 is a diagram for explaining a disbursement transaction process in the automated teller machine 101 (conducted by using the cellular phone 110). Referring to Fig. 28, when the user 120 comes close to the automated teller machine 101, and the customer sensor 107 detects the presence of the user 120, the main control unit 209 displays the transaction select screen shown in Fig. 5 on the display input unit 102, and allows the user 120 to select a transaction to be implemented from the transaction select screen (Step S2801). There is a transaction menu "cellular phone transaction" using the cellular phone 110 on the transaction select screen, and in this example, "cellular phone transaction" is selected (Step S2802). The select screen of the "cellular phone transaction" and "credit repayment" shown in Fig. 6 is displayed on the display input unit 102. In this example, the user 120 selects "credit repayment" (Step S2803). After selection, the set guidance of the cellular phone 110 shown in Fig. 7 is displayed on the display input unit 102 (Step S2804), and the main control unit 209 detects that the cellular phone 110 approaches the upper portion of the non-contact IC reader. When the approach is detected, and a communication can be conducted, the account information on the user 120 according to the selected sort is read from the non-contact IC chip that is incorporated into the cellular phone 110 (Step S2805).

Then, the main control unit 209 transmits a polling command to the cellular phone 110 from the non-contact IC reader 109, monitors its reply (Step S2806), and determines whether the cellular phone 110 has been left as it was or not (Step S2807). In the case where the main control unit 209 determines that the cellular phone 110 has been left as it was, the main control unit 209 starts the leaving detection timer (Step S2808), and is ready to add with a warning display of "take a cellular phone" within the screen of the normal personal identification number input guidance shown in Fig. 9 (Step S2809). Then, the main control unit 209 displays the screen of the personal identification number input guidance shown in Fig. 9, and prompts the input of the personal identification number (Step S2810).

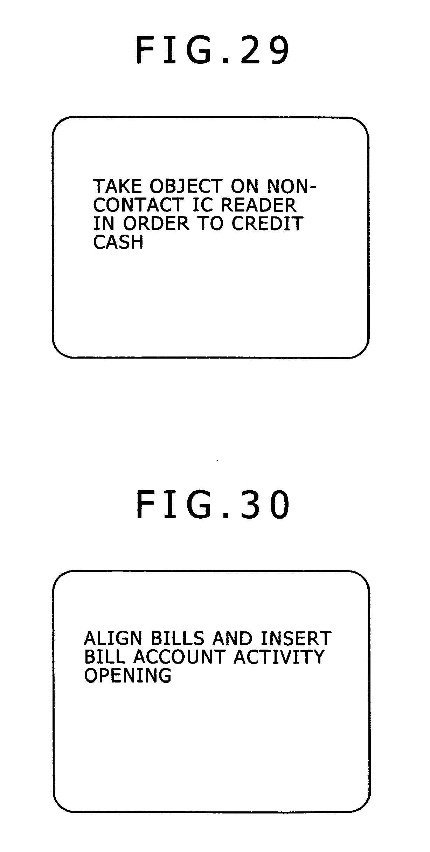

When the user 120 has completely input the personal identification number, the main control unit 209 transmits a polling command to the cellular phone 110 from the non-contact IC reader 109, and monitors its reply (Step S2811). When the reply is returned, the main control unit 209 determines that the cellular phone 110 has been left as it was, but when no reply is returned, the main control unit 209 determines that the cellular pone has been recovered (Step S2812). When the reply is returned, since the cellular phone 110 has been left as it was, the main control unit 209 displays the screen of "take an object on the non-contact IC reader in order to credit cash" on the display input section 102 shown in Fig. 29, and issues a warning to the user 120 with the same voice guidance from the speaker 108 (Step S2813). Then, the customer sensor 107 determines whether the user 120 has been away from the automated teller machine 101 or not (Step S2814). Then, the main control unit 209 reads the leaving detection timer, and determines whether a given time is elapsed and timed out or not (Step S2815). When the elapsed time is not timed out, the main control unit 209 transmits the polling command to the cellular phone 110 from the non-contact IC reader 109, and monitors its reply (Step S2816). When the reply is returned, the cellular phone 110 has been left as it was, but when no reply is returned, the main control unit 209 determines that the cellular phone 110 has been recovered (Step S2817) . When the cellular phone 110 has been left as it was, the processing is returned to Step S2813, the main control unit 209 again guides "take an object on the non-contact IC reader in order to credit cash" shown in Fig. 29 from the display input unit 102 or the speaker 108, and issues a warning to the user 120. The above operation is repeated, and the main control unit 209 waits for a return of the cellular phone 110 to the user 120. When a given time is elapsed and timed out in Step S2815, the main control unit 209 determines whether the time-out is the first time-out or the second time-out (Step S2818) . When the time-out is the first time-out, the main control unit 209 displays "transaction cancel screen" shown in Fig. 13, and guides the user 120 so as to reattempt the operation from the beginning (Step S2819).

In Step S2814, in the case where the user 120 has been away while the cellular phone 110 has been left as it was, the automated teller machine 101 displays "transaction stop" (Step S2820), and the main control unit 209 issues the recovery instruction of the cellular phone 110 to the shutter control unit 208 (Step S2821). In this case, as shown in Fig. 26, the shutter control unit 208 opens the shutter 2201 of the bit account activity opening 104, drops the cellular phone 110 in the bit account activity opening 104, and recovers the cellular phone 110 (Step S2822). When the cellular phone 110 has been recovered, the main control unit 209 closes the shutter 2201 (Step S2823). Thereafter, the main control unit 209 notifies the attendant, and instructs the attendant to recover the cellular phone 110 (Step S2824). In the case where the main control unit 209 determines that the time-out is the second time-out in Step S2815, the main control unit 209 calls for the attendant, and guides the user 120 the operation (Step S2824) .

When the cellular phone 110 has been recovered from the non-contact IC reader 109, the main control unit 209 displays the credit guidance shown in Fig. 30, and then opens the shutter 2201 of the bill account activity opening 104. When the user 120 inserts bills, the main control unit 209 counts up the bills while paying out the bills (Step S2825). Upon completion of the count, the main control unit 209 displays the amount of money, and prompts the user 120 to confirm the amount of money (Step S2826). When the input of the personal identification number and the confirmation of the amount of money have been completed, the main control unit 209 transmits the transaction information to the business center of the financial institution by the aid of the communication unit 212 (communication with the center) . The host computer of the business center matches the transmitted account information on the user 120 against the personal identification number that has been registered in advance. When matching is made, the host computer conducts the credit process by the refund amount, and replies to the automated teller machine 101 (Step S2827). The automated teller machine 101 discharges a receipt on which the transaction contents have been printed by the receipt print mechanism 207 from the card and receipt entrance 106 (Step S2828). When the customer sensor 107 confirms that the user 120 receives the receipt and moves away from the automated teller machine 101, the transaction is completed.

In Fig. 28, the customer sensor 107 monitors the move-away of the user 120 after the personal identification number has been input, alternatively, after the user information has been read. Also, the user can always be monitored after the user 120 stands in front of the automated teller machine 101.

Also, in the above description, it is assumed that when the non-contact IC chip that is incorporated into the cellular phone is brought close to the non-contact IC reader 109, and the account information of the user 120 has been read from the non-contact IC chip, the cellular phone 110 is returned to the user 120 from the non-contact IC reader 109. However, there is a case in which other account information of the user 120 is again read from the non-contact IC chip depending to the transaction. In this case, the leaving can be monitored after the reading of the non-contact IC chip has been completely terminated.

As has been described above, according to this embodiment,
(1) In the automated teller machine, it is detected whether or not the cellular phone with the non-contact IC card built in it or the portable medium such as the non-contact IC card is placed on the information read unit such as the IC reader as it is. In the case where the cellular phone or the portable medium is placed (left) thereon as it is, it is possible to issue a warning so as to recover the cellular phone or the portable medium by the aid of the character display, the voice display, or the flicker display.
(2) In the case of leaving, a warning is issued, and the shutter (cover) of the account activity opening is locked to prohibit the deposit or withdrawal of cash, thereby making it possible that the user surely notices the leaving.
(3) The antenna unit of the non-contact IC information read unit is fitted to the shutter (cover) of the account activity opening, and the shutter (cover) of the account activity opening with the antenna unit also serves as a table of the cellular phone or the non-contact IC card. With the above configuration, the user can be informed that the shutter (cover) of the account activity opening is not opened because the cellular phone is left.
(4) In the case where the user has been away while the cellular phone has been left as it was, the shutter (cover) of the bill account activity opening is opened, and the cellular phone is recovered within the bill account activity mechanism. With the above configuration, it is possible to surely prevent the lost of the cellular phone.

As has been described above, when the portable medium is left on the information read unit after the account information has been read from the portable medium, the leaving of the portable medium is guided on the displace screen or by voice in parallel to the normal refund or credit process. Then, the user is prompted so as to recover the portable medium before cash is refunded or credited. Also, in the case where the user has been away while the cellular phone has been left as it was, the shutter (cover) of the bill account activity opening is opened, and the cellular phone is recovered within the bill account activity mechanism.

For that reason, it is possible to surely suppress the lost of the portable medium.

## Claims

1. An automated teller machine, comprising:
a non-contact IC reader having a read unit into which an antenna is incorporated, which reads card data from a non-contact IC chip that is incorporated into a portable medium which is arranged on the read unit, and detects whether the portable medium exists on the read unit or not, according to the presence/absence of a reply from the non-contact IC chip;
a shutter that opens or closes a bill account activity opening;
a display input unit that displays a guidance of transaction operation and receives an input of the transaction operation by a customer; and
a control unit that controls the non-contact IC reader, the shutter, and the display input unit,
wherein the control unit suspends a teller transaction when it is detected that the portable medium exists after the card data is read from the IC chip that is incorporated into the portable medium through the antenna.

2. The automated teller machine according to claim 1, wherein said antenna built-in read unit is mounted on a plane of said shutter plane.

3. The automated teller machine according to claim 1, further comprising a customer sensor that detects the presence of a customer,
wherein the control unit opens the shutter and recovers the portable medium from the account activity opening when it is detected that the portable medium exists after the card data is read from the IC chip that is incorporated into the portable medium through the antenna, and the customer sensor does not the presence of the customer.

4. The automated teller machine according to claim 1,
wherein the non-contact IC reader includes a detection mechanism that detects the presence of the portable medium that is placed on the read unit according to the presence/absence of the distortion of a support mechanism that supports the portable medium.

5. The automated teller machine according to claim 1,
wherein the non-contact IC reader transmits a polling command to the portable medium that is placed on the read unit, and detects the presence/absence of the portable medium according to the presence/absence of a reply to the command.

6. The automated teller machine according to claim 1,
wherein the non-contact IC reader detects the presence of the portable medium that is placed on the read unit according to the presence of the distortion of a support mechanism that supports the portable medium, or the presence of a reply to the polling command.

7. The automated teller machine according to claim 1,
wherein the control unit displays a message that prompts the recovery of the portable medium on the display input unit when the presence of the portable medium is detected after the card data is read from the IC chip that is incorporated into the portable medium through the antenna.

8. The automated teller machine according to claim 4,
wherein the control unit displays a message that prompts the recovery of an object on the display input unit when the detection mechanism detects the presence of the object that is placed on the read unit.

9. The automated teller machine according to claim 6,
wherein the control unit includes a shutter control unit that controls the open/close of the shutter, and the control unit opens the shutter when there are no distortion of a support mechanism for support and no reply to the polling command.

10. The automated teller machine according to claim 1,
wherein the automated teller machine includes a table on which the portable medium is placed, and a flicker lamp is disposed in the vicinity of the table.
